# EUROPEAN PATENT SPECIFICATION

(11) **EP 0 564 704 B1**
(45) Date of publication and mention of the grant of the patent: **17.09.1997**
(21) Application number: 92119831.3
(22) Date of filing: 20.11.1992
(51) Int. Cl.: A23K 1/16, A23K 1/18

(54) **Feed composition for mother sows**
Futterzusammensetzung für Mutterschweine
Composition de fourrage pour truies

(30) Priority: 06.04.1992 JP 82586/92
(43) Date of publication of application: 13.10.1993
(73) Proprietor: Ajinomoto Co., Inc., Tokyo 104 (JP)
(72) Inventor: Toride, Yasuhiko, Chuo-ku, Tokyo (JP); Onishi, Norimasa, c/o Cent. Res. Lab. Ajinomoto, Kawasaki-shi, Kanagawa-ken (JP); Togashi, Yoichiro, Chuo-ku, Tokyo (JP)
(74) Representative: Strehl Schübel-Hopf Groening & Partner

(56) References cited:
- EP-A- 0 342 111
- EP-A- 0 416 892
- SCHWEINEWELT vol. 12, no. 1, 1987, DE pages 5 - 8 DIETRICH KAHRS 'TOYOCERIN in der Schweineproduktion'

## Description

### Field of the Invention:

The present invention relates to a feed composition for mother sows. More precisely, it relates to a feed composition for mother sows, which is fed to pregnant mother sows so as to reduce the lethal percentage of piglings from the sows during birth or breast-feeding of them and to prevent the born piglings from having diarrhea thereby to promote increase of the weight of them during the breast-feeding period.

### Prior Art:

At present, alvine flux (diarrhea) of piglings during the breast-feeding of them is one of the most important problems for hog raisers. Death of piglings due to diarrhea of them during the period of from the birth of them up to about 4 weeks before weaning of them from their mothers often occurs in the field of pig farming. Even though the piglings as suffering from such diarrhea do not die, it is known that such diarrhea has a bad influence on the growth of the piglings especially on the increase of the weight of them. Piglings which suffer from diarrhea during the breast-feeding period as well as death of the piglings due to the disease give extreme economical loss and damage to hog raisers, which is a serious problem in the field of pig farming.

Death of piglings during birth of them due to various reasons also gives extreme economical loss and damage to hog raisers.

Under the situation, the present applicant previously proposed administration of a composition for preventing and curing diarrhea to piglings during the breast-feeding period (Japanese Patent Application Laid-Open No. 3-173826). The proposed preventing and curing composition may easily be produced by mass-production and may be handled with ease. It displays an excellent preventing and curing effect to diarrhea due to immunoactivation. However, the proposed way is to administer the composition to born piglings and therefore involves a problem that depression of the number of normal litters due to stillbirths could not be retarded.

For the purpose of lowering the percentage of stillborn pigs at the birth, there is known a report of reporting that the number of a litter of pigs may be increased by feeding a mother sow with a garlic powder or licorice powder known as a physiologically active substance (Journal of Japan Pig Farming Association, Vol. 28, No. 3, p. 225, 1991). In the case, however, the number of a litter of pigs from the group of mother sows as fed with the powder is 11.3 heads on average, while that from the control group not fed with it is 10.4 heads on average. Thus, the difference between them is only less than one head. Under the situation, a feed composition for mother sows which is more effective is desired.

In addition, there is also known a report of reporting that feeding of a living microbial agent Toyocerin (registered trade name by Toyo Jozo Co.) to mother sows results in little death of born piglings during the breast-feeding period so that the number of a litter of shoats per one mother sow in the group as fed with the agent is higher than that in the control group as fed without the agent (Data for Public Relations of Toyocerin, Edition for Overseas Information, published by Toyo Jozo Co.). In the report, however, the percentage of the increment of the number of a litter of the shoats in the test group as fed with the agent is only up to 3 to 6 % to the control group as fed without it.

EP-A-0 342 111 discloses a feed composition for mother sows containing bacterial cells or spores of a particular species of the genus Bacillus to reduce the lethal percentage of piglings. The bacterial spores according to this document are revivifiable. It is obvious that these features of the cells or spores render the process of EP-A-0 342 111 expensive and thus not economical.

### Problems to be Solved by the Invention:

The object of the present invention is to provide a much more effective, much more economical and much more inexpensive means for reducing the percentage of the death of piglings during the birth or breast-feeding period while they are weakly resistant to the environmental variation and also for protecting the piglings from diarrhea thereby to promote increase of the weight of them.

### Means for Solving the Problems:

In consideration of the above-mentioned situation, the present inventors earnestly made repeated investigations and, as a result, have found that, by feeding pregnant mother sows with a feed composition containing at least one selected form the group consisting of sterilized bacterial cells, disrupted cell fragments from the cells and cell wall component-containing fractions from the fragments, the percentage of the death of piglings from the thus fed mother sows during the birth or breast-feeding period may be lowered and the percentage of the piglings from them which suffer from diarrhea may also be lowered during the breast-feeding period to thereby noticeably increase the weight of the piglings. On the basis of the finding, they have achieved the present invention.

Specifically, the present invention provides a feed composition for mother sows which contains at least one selected from the group consisting of sterilized bacterial cells, disrupted cell fragments to be obtained by mechanical disruption or enzymatic decomposition of the cells and cell wall component-containing fractions to be obtained by fractionation of the disrupted cell fragments; the feed composition being fed to pregnant mother sows so as to reduce the lethal percentage of piglings from the sows during birth or breast-feeding of them and to prevent the born piglings from having diarrhea thereby to promote increase of the weight of them during the breast-feeding period.

The bacteria to be used in the feed composition for mother sows of the present invention are preferably aerobic bacteria which may be prepared in large amounts with ease. However, anaerobic bacteria may also be used. Specifically, they include bacteria of the genus Bacillus such as Bacillus subtilis ATCC 13952, those of the genus Brevibacterium such as Brevibacterium latofermentum ATCC 13869, and those of the genus Corynebacterium such as Corynebacterium glutamicum ATCC 13032 and ATCC 13060. One or more kinds of them may be used in the present invention.

For obtaining the cells of such bacteria, in general, the bacteria may be cultivated in a medium containing nutrient sources which may be assimilated by them. For instance, for cultivating them, any ordinary medium may be employed, which contains carbon sources of including hydrocarbons such as glucose and sucrose, alcohols such as ethanol and glycerol, organic acids such as acetic acid and propionic acid, and soybean oil and mixtures of them, nitrogen-containing organic nutrient sources such as yeast extract, peptone, meat broth, corn steep liquor, ammonium sulfate and ammonia, inorganic nutrient sources such as phosphates, magnesium, iron, manganese and potassium, and/or vitamins such as biotin and thiamine. For actual cultivation, they may be aerobically cultivated in the nutrient medium having a pH range of from 4.0 to 9.5 at a temperature of from 20 to 40°C for a period of from 12 hours to 5 days.

The bacterial cells to be obtained by cultivation are separated from the culture and sterilized by heat-treatment. They may directly be used in preparing the composition of the present invention. However, the cells are preferably disrupted. For disrupting them, any of mechanical disruption and enzymatic decomposition may be employed. For mechanical disruption of the cells, for example, usable are an ultrasonic disrupter, a beat beater and a French press. For enzymatic decomposition of the cells, the cultivated bacterial cells or the mechanically disrupted fragments of the cells are suspended in a physiological saline solution, to which an enzyme for cell wall dissolution is added to thereby decompose the cell walls of the cells. For this, any and every enzyme having a capacity of dissolving cell walls may be used. Typical example of it include lysozyme and protease. The conditions for the enzymatic treatment may be conventional ones. In either the mechanical process and the enzymatic process, the percentage of the disrupted cells is desired to be 20 % or more. For promoting the disruption, combination of the mechanical process and the enzymatic process is preferred.

The disrupted cell fragments may be fractionated to separate cell wall component-containing fractions. The fractionation may be effected by merely subjecting the fragments to centrifugation to remove the insoluble substances therefrom. If desired, any other known method for molecular fractionation of proteins may also be employed, including, for example, ultrafiltration and gel permeation. The fractions thus obtained by fractionation of the disrupted cell fragments may also be used for preparing the feed composition for mother sows of the present invention.

The feed composition for mother sows of the present invention may be prepared by adding the prepared cells, the disrupted cell fragments or the cell wall component-containing fractions to an ordinary feed for mother sows. The prepared cells, the disrupted cell fragments or the cell wall component-containing fractions have been identified to have an excellent immunoactivating effect in a test of using mouse spleen cells (Japanese Patent Application Laid-Open No. 3-173826).

The amount of the additives is, when the disrupted cell fragments are used directly as they are, preferably from 0.005 to 0.5 % by weight, especially preferably from 0.01 to 0.05 % by weight.

The other components than the specific additives of constituting the feed composition for mother sows of the present invention are not specifically defined. For instance, the composition may contain from 10 to 25 % by weight of crude proteins and from 1 to 10 % by weight of crude fats. The metabolic energy of the composition may be from 2000 to 4000 kcal/kg.

The present invention is characterized by feeding the above-mentioned feed composition to pregnant mother sows. Feeding it to them may be effected continuously or discontinuously. The period of the feeding may be before farrowing to at least up to farrowing, more preferably at least up to the end of breast-feeding to piglings.

### Examples:

The present invention will be explained in more detail by way of the following examples.

### Example 1:

### (1) Preparation of Bacterial Cells

50 ml of a medium (pH 7) comprising 1.0 g/dl of glucose, 1.0 g/dl of yeast extract, 1.0 g/liter of peptone, 0.5 g/dl of (NH₄)₂SO₄, 0.3 g/dl of K₂HPO₄, 0.1 g/dl of KH₂PO₄ and 0.05 g/dl of MgSO₄.7H₂O was put in a 500 ml-flask and sterilized under heat at 115°C for 15 minutes. To this was inoculated one platinum loop of cells of each of Bacillus subtilis ATCC 13952, Brevibacterium latofermentum ATCC 13869 and Corynebacterium glutamicum ATCC 13032, which had been previously cultivated in a bouillon-agar medium at 30°C for one day. Then, these were further cultivated in the medium at 30°C for 24 hours by shaking culture. After cultivation, the respective cultures were subjected to centrifugation to collect the cells. The cells were suspended in a physiological saline solution of the same amount of the culture and sterilized under heat at 100°C for 10 minutes. The suspension was again subjected to centrifugation to collect the cells.

The weight of the thus obtained wet cells per 100 ml of the medium is shown in Table 1 below.

**Table 1**

| | Weight of Wet Cells (g/100 ml) |
|---|---|
| Bacillus subtilis ATCC 13952 | 4.2 |
| Brevibacterium latofermentum ATCC 13869 | 5.6 |
| Corynebacterium glutamicum ATCC 13032 | 5.4 |

### (2) Preparation of Cell Fragments by Mechanical Disruption

The respective wet cells as prepared in (1) were suspended in 25 mM phosphate buffer (pH 7.0) to give a 10 wt.% suspension. The cell suspension was put in a 50 ml-stainless steel bottle and treated with an ultrasonic disrupter (UR-200P Model, manufactured by Tomy Seiko Co.) under the condition of an oscillating frequency of 20 kHz and a power of 200 W. After the treatment, this was subjected to centrifugation for fractionating the cell wall component-containing fractions. The fractions were then dried.

### (3) Preparation of Cell Fragments by Enzymatic Decomposition

To a 25 mM phosphate buffer (pH 7.0) containing 10 % by weight, as the solid content, of the respective cells as prepared in (1), were added 0.01 % by weight of egg white lysozyme (produced by Sigma Co.) and 0.02 % by weight of actinase (70,000 units, produced by Kaken Pharmaceutical Co.). This was then treated with the enzymes at 37°C for 12 hours. Next, this was heated at 100°C for 2 minutes so that the enzymes were deactivated. This was then dried.

### Example 2:

To a basic feed for mother sows, were added the cell fragments as prepared in the previous (1), (2) or (3) in an amount of 0.01 or 0.05 % by weight, respectively. Thus, feeds for mother sows were prepared. The composition of the basic feed for mother sows (hereinafter referred to as "basic feed") used here is shown in Table 2 below.

**Table 2**

| Composition of Basic Feed for Mother Sows | |
|---|---|
| Components | Content (wt.%) |
| Unpolished rice | 10.000 |
| Rice bran | 37.500 |
| Corn | 22.203 |
| Soybean lees (48 %) | 11.689 |
| Fish powder (51 %) | 5.275 |
| Palm kernel oil | 10.000 |
| Calcium carbonate | 1.654 |
| Animal fats and oils | 0.307 |
| Premix (during breast-feeding period) | 0.500 |
| Salt | 0.601 |
| DL-methionine | 0.030 |
| L-lysine hydrochloride | 0.241 |
| Values of Nutrient Components Metabolic energy (kcal/kg) | 3100 |
| Crude proteins (%) | 16.80 |
| Crude saturated fatty acids (%) | 2.35 |
| Crude unsaturated fatty acids (%) | 8.48 |
| Crude fibers (%) | 6.26 |
| Calcium (%) | 1.15 |
| Lysine (%) | 1.00 |
| Effective lysine (%) | 0.78 |
| S-containing amino acids (%) | 0.60 |
| Tryptophan (%) | 0.19 |
| Threonine (%) | 0.60 |
| Total phosphorus (%) | 0.95 |
| Effective phosphorus (%) | 0.41 |
| Salt (%) | 0.70 |
| Water (%) | 11.62 |

### Example 3:

Using feeds for mother sows, each containing the enzymatically decomposed cell fragments of Brevibacterium latofermentum ATCC 13869, the mechanically disrupted cell fragments of Corynebacterium glutamicum ATCC 13032 or the sterilized cells of Bacillus subtilis ATCC 13952 in an amount of 0.01 % by weight or 0.05 % by weight (hereinafter referred to as 0.01 % Brevibacterium-containing feed, 0.05 % Brevibacterium-containing feed, 0.01 % Corynebacterium-containing feed, 0.05 % Corynebacterium-containing feed, 0.01 % Bacillus-containing feed and 0.05 % Bacillus-containing feed, respectively), the following experiments were carried out.

28 mother sows of 2 to 6 time-multiparous female Landrace each as falling pregnant by being crossed with male Large White were grouped into 7 groups each comprising the four mother sows. They were fed with one of the basic feed, 0.01 % Brevibacterium-containing feed, 0.05 % Brevibacterium-containing feed, 0.01 % Corynebacterium-containing feed, 0.05 % Corynebacterium-containing feed, 0.01 % Bacillus-containing feed and 0.05 % Bacillus-containing feed, for a period of from one week before their farrow to 25 days after the same, in the manner as indicated in Table 3 below. The increment of the weight of the piglings as born from the mother sows in each group as well as the condition of the diarrhea, if any, of them was checked for a period of 25 days after their farrow. The results are shown in Table 3 below.

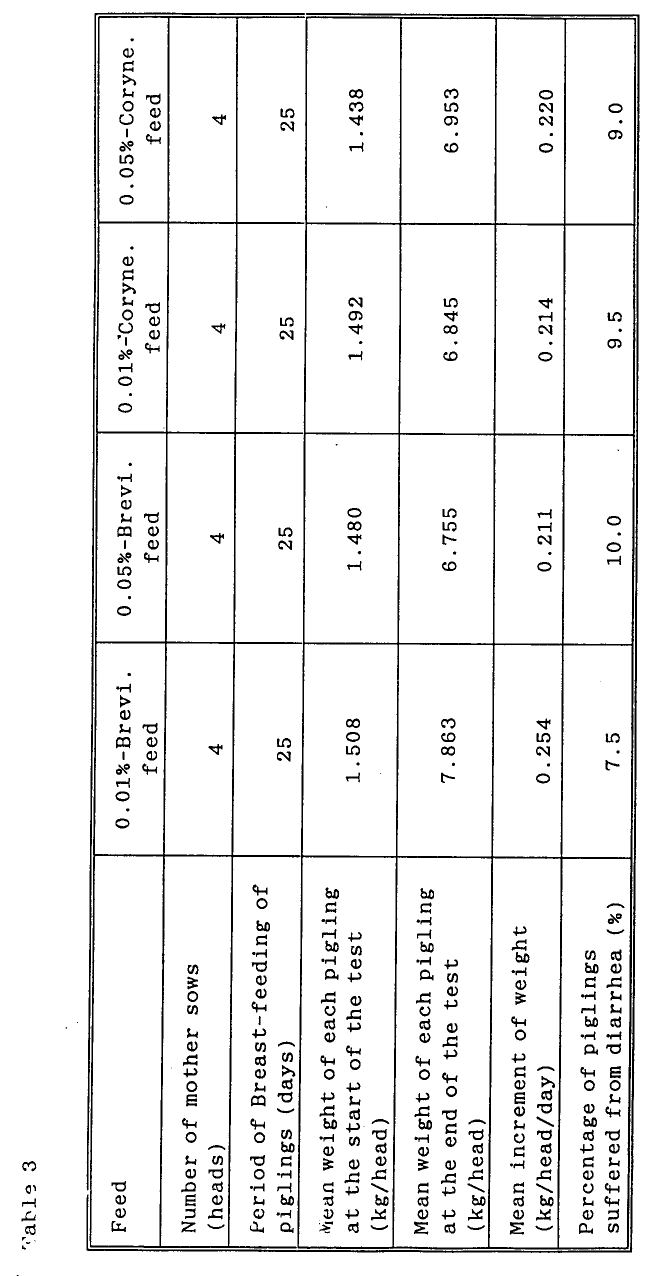

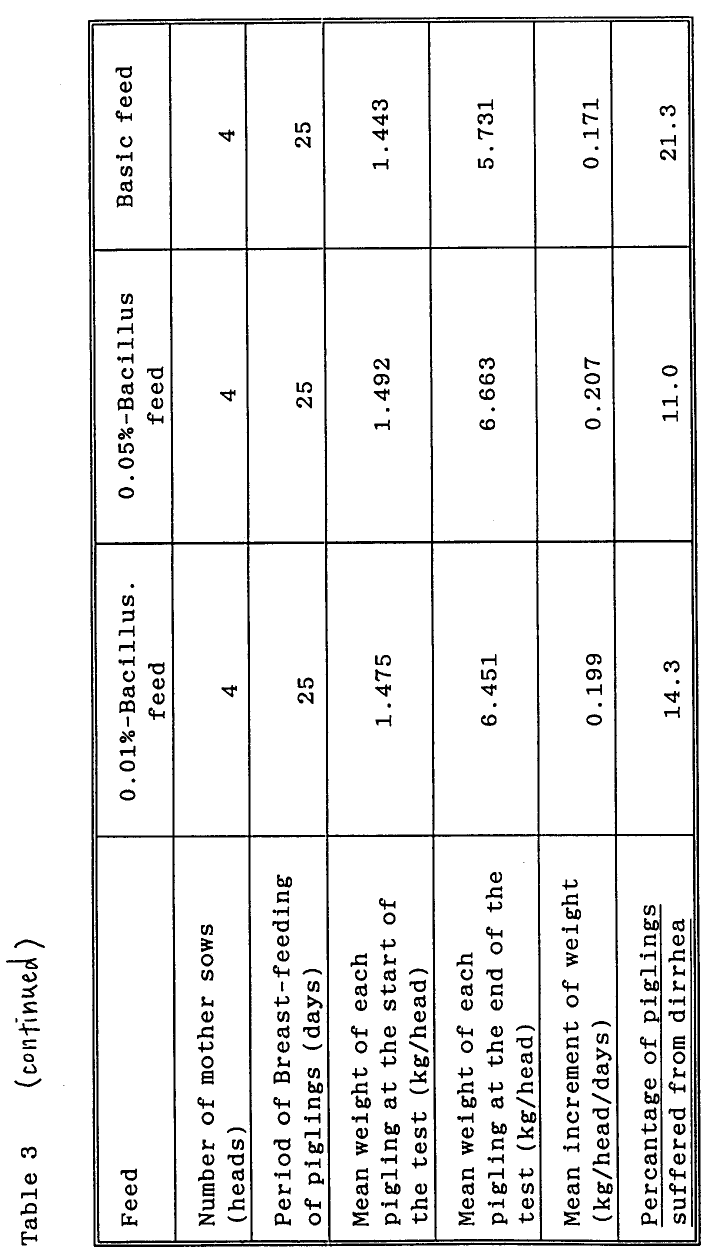

Next, the above-mentioned mother sows were grouped into two groups each comprising 4 heads. They were fed with either the 0.01 % Brevibacterium-containing feed or the basic feed throughout the pregnant period and the breast-feeding period. The increment of the weight of the piglings born from them as well as the condition of the diarrhea of the piglings and also the percentage of the dead piglings at their farrow and during their breast-feeding period were checked. The results are shown in Table 4 below.

**Table 4**

| Feed | 0.01%-Brevi. feed | Basic feed |
|---|---|---|
| Number of mother sows (heads) | 4 | 4 |
| Total of litters from all mother sows (heads) Number of stillbirths (heads) | 43 0 | 41 4 |
| Number of piglings at the start of the test (heads) | 43 | 37 |
| Number of piglings at the end of the test (heads) | 43 | 33 |
| Mean weight of piglings at the start of the test (kg/head) | 1.50 | 1.50 |
| Mean weight of piglings at the end of the test (kg/head) | 6.55 | 6.26 |
| Increment of mean weight (kg/head/day) | 0.202 | 0.190 |
| Percentage of piglings suffered from diarrhea (%) | 4.7 | 40.5 |
| Percentage of piglings as died at birth (%) | 0 | 9.8 |
| Percentage of piglings as died during the test (%) | 0 | 10.8 |

From the above-mentioned experiment, it is obvious that feeding of the feed composition of the present invention to mother sows throughout the pregnant period and the breast-feeding period resulted in depression of the percentage of the piglings died at the farrow and during the breast-feeding period and depression of the percentage of the piglings suffered from diarrhea and also elevation of the weight of the grown piglings.

### Advantage of the Invention:

By feeding the feed composition of the present invention to pregnant mother sows, the percentage of the piglings as born from the mother sows but died at the farrow and during the breast-feeding period is lowered, the number of the piglings suffered from diarrhea during the breast-feeding period is lowered, and the weight of the grown piglings increased.

## Claims (Claims for the following Contracting State(s): DE, DK, FR, GB, IT, NL, SE)

1. A feed composition for mother sows which contains at least one selected from the group consisting of sterilized bacterial cells, disrupted cell fragments obtained by mechanical disruption or enzymatic decomposition of the cells and cell wall component-containing fractions obtained by fractionation of the disrupted cell fragments.

2. The feed composition for mother sows as claimed in claim 1, in which the bacterial cells are those to be selected from bacteria belonging to the genera Bacillus, Brevibacterium and Corynebacterium.

3. The composition as claimed in claim 1 or 2 for use as feed for pregnant mother sows so as to reduce the lethal percentage of piglings from the sows during birth or breast feeding of them and to prevent the born piglings from having diarrhoea thereby to promote increase of the weight of them during the breast feeding period.

4. The composition for use as claimed in claim 3, wherein said feed composition is fed every day to pregnant sows at least for one week before the delivery of piglings from them.

## Claims (Claims for the following Contracting State(s): ES)

1. A method for the preparation of a feed composition for mother sows, wherein bacterial cells are sterilized, cells are disrupted by mechanical disruption or enzymatic decomposition to obtain cell fragments, and/or disrupted cell fragments are fractionated to obtain cell wall component-containing fractions, and at least one of said components is added to feed for mother sows to give said feed composition.

2. The method for the preparation of a feed composition for mother sows as claimed in claim 1, wherein the bacterial cells are those to be selected from bacteria belonging to the genera Bacillus, Brevibacterium and Corynebacterium.

3. The composition for mother sows as obtained by the method of claim 1 or 2 for use as feed for pregnant mother sows so as to reduce the lethal percentage of piglings from the sows during birth or breast feeding of them and to prevent the born piglings from having diarrhoea thereby to promote increase of the weight of them during the breast feeding period.

4. The composition for mother sows for use as claimed in claim 3, wherein said feed composition is fed every day to pregnant sows at least for one week before the delivery of piglings from them.

5. A feed composition for mother sows which contains at least one selected from the group consisting of sterilized bacterial cells, disrupted cell fragments obtained by mechanical disruption or enzymatic decomposition of the cells and cell wall component containing fractions obtained by fractionation of the disrupted cells fragments.

6. The feed composition for mother sows as claimed in claim 1, in which the bacterial cells are those to be selected from bacteria belonging to the genera Bacillus, Brevibacterium and Corynebacterium.

7. The composition as claimed in claim 5 or 6 for use as feed for pregnant mother sows so as to reduce the lethal percentage of piglings from the sows during birth or breast feeding of them and to prevent the born piglings from having diarrhoea thereby to promote increase of the weight of them during the breast feeding period.

8. The composition for use as claimed in claim 7, wherein said feed composition is fed every day to pregnant mother sows at least for one week before the delivery of piglings from them.

## Patentansprüche (Patentansprüche für folgende(n) Vertragsstaat(en): DE, DK, FR, GB, IT, NL, SE)

1. Futtermittelzusammensetzung für Mutterschweine, welche mindestens einen Bestandteil enthält, der aus der aus sterilisierten Bakterienzellen, zerstörten Zellfragmenten, die durch mechanische Zerstörung oder enzymatische Zersetzung der Zellen erhalten wurden und Zellwandkomponenten enthaltende Fraktionen, die durch Fraktionierung der zerstörten Zellfragmente erhalten wurden, bestehenden Gruppe ausgewählt ist.

2. Futtermittelzusammensetzung für Mutterschweine gemäß Anspruch 1, in welcher die Bakterienzellen unter Bakterien der Gattungen Bacillus, Brevibacterium und Corynebacterium ausgewählt sind.

3. Zusammensetzung gemäß Anspruch 1 oder 2 zur Verwendung als Futter für trächtige Mutterschweine, um die Letalitätsrate der Ferkel dieser Schweine während der Geburt oder des Säugens zu reduzieren und um zu verhindern, daß die geborenen Ferkel Durchfall bekommen, wodurch deren Gewichtszunahme während der Zeit des Säugens erleichtert wird.

4. Zusammensetzung zur Verwendung gemäß Anspruch 3, wobei die Futtermittelzusammensetzung über mindestens eine Woche vor der Geburt der Ferkel täglich an die trächtigen Schweine verfüttert wird.

## Patentansprüche (Patentansprüche für folgende(n) Vertragsstaat(en): ES)

1. Verfahren zur Herstellung einer Futtermittelzusammensetzung für Mutterschweine, wobei Bakterienzellen sterilisiert werden, Zellen durch mechanische Zerstörung oder enzymatische Zersetzung zerstört werden, wobei Zellfragmente erhalten werden, und/oder zerstörte Zellfragmente fraktioniert werden, wobei Zellwandbestandteile enthaltende Fraktionen erhalten werden, und mindestens einer der Bestandteile dem Futter für Mutterschweine zugegeben wird, wobei die Futtermittelzusammensetzung erhalten wird.

2. Verfahren zur Herstellung einer Futtermittelzusammensetzung für Mutterschweine gemäß Anspruch 1, wobei die Bakterienzellen unter den Gattungen Bacillus, Brevibacterium und Corynebacterium ausgewählt sind.

3. Zusammensetzung für Mutterschweine, die gemäß dem Verfahren nach Anspruch 1 oder 2 erhalten wird, zur Verwendung als Futter für trächtige Mutterschweine, um die Letalitätsrate der Ferkel dieser Schweine während der Geburt oder des Säugens zu reduzieren und zu verhindern, daß die geborenen Ferkel Durchfall bekommen, wodurch die Gewichtszunahme während der Zeit des Säugens erleichtert wird.

4. Zusammensetzung für Mutterschweine zur Verwendung gemäß Anspruch 3, wobei die Futtermittelzusammensetzung über mindestens eine Woche vor der Geburt der Ferkel täglich an die trächtigen Schweine verfüttert wird.

5. Futtermittelzusammensetzung für Mutterschweine, die mindestens einen Bestandteil enthält, der aus der aus sterilisierten Bakterienzellen, zerstörten Zellfragmenten, die durch mechanische Zerstörung oder enzymatische Zersetzung der Zellen erhalten wurden, und Zellwandkomponenten enthaltende Fraktionen, die durch Fraktionierung von zerstörten Zellfragmenten erhalten wurden, bestehenden Gruppe ausgewählt ist.

6. Futtermittelzusammensetzung für Mutterschweine gemäß Anspruch 1, wobei die Bakterienzellen unter den Gattungen Bacillus, Brevibacterium und Corynebacterium ausgewählt sind.

7. Zusammensetzung gemäß Anspruch 5 oder 6 zur Verwendung als Futter für trächtige Mutterschweine, um die Letalitätsrate der Ferkel dieser Schweine während der Geburt oder der Zeit des Säugens zu reduzieren und zu verhindern, daß die geborenen Ferkel Durchfall bekommen, wodurch deren Gewichtszunahme während der Zeit des Säugens erleichtert wird.

8. Zusammensetzung zur Verwendung gemäß Anspruch 7, wobei die Futtermittelzusammensetzung über mindestens eine Woche vor der Geburt der Ferkel täglich an die trächtigen Mutterschweine verfüttert wird.

## Revendications (Revendications pour l'(les) Etat(s) contractant(s) suivant(s): DE, DK, FR, GB, IT, NL, SE)

1. Composition alimentaire pour truies mères, laquelle contient au moins un composant du groupe constitué par des cellules bactériennes stérilisées, des fragments cellulaires désintégrés obtenus par désintégration mécanique ou décomposition enzymatique des cellules et des fractions contenant des composants de la paroi cellulaire obtenues par fractionnement des fragments cellulaires désintégrés.

2. Composition alimentaire pour truies mères selon la revendication 1, où les cellules bactériennes sont sélectionnées parmi des bactéries appartenant aux genres Bacillus, Brevibacterium et Corynebacterium.

3. Composition selon la revendication 1 ou 2, à utiliser comme aliment pour truies mères gravides de façon à réduire le pourcentage de mortalité des porcelets des truies durant leur mise bas ou leur allaitement et à prévenir la diarrhée chez les porcelets mis bas, pour ainsi favoriser l'élévation de leur poids durant la période d'allaitement.

4. Composition à utiliser selon la revendication 3, où chaque composition alimentaire est donnée chaque jour à des truies gravides au moins pendant une semaine avant la mise bas de leurs porcelets.

## Revendications (Revendications pour l'(les) Etat(s) contractant(s) suivant(s): ES)

1. Procédé de préparation d'une composition alimentaire pour truies mères, où des cellules bactériennes sont stérilisées, des cellules sont désintégrées par désintégration mécanique ou décomposition enzymatique pour donner des fragments cellulaires et/ou des fragments cellulaires désintégrés sont fractionnés pour donner des fractions contenant des composants de la paroi cellulaire et au moins un desdits composants est ajouté à un aliment pour truies mères pour donner ladite composition alimentaire.

2. Procédé de préparation d'une composition alimentaire pour truies mères selon la revendication 1, où les cellules bactériennes sont sélectionnées parmi des bactéries appartenant aux genres Bacillus, Brevibacterium et Corynebacterium.

3. Composition pour truies mères telle qu'obtenue par le procédé selon la revendication 1 ou 2, à utiliser comme aliment pour truies mères gravides de façon à réduire le pourcentage de mortalité des porcelets des truies durant leur mise bas ou leur allaitement et à prévenir la diarrhée chez les porcelets nés, pour ainsi favoriser l'élévation de leur poids durant la période d'allaitement.

4. Composition pour truies mères à utiliser selon la revendication 3, où ladite composition alimentaire est donnée chaque jour à des truies gravides au moins pendant une semaine avant la mise bas de leurs porcelets.

5. Composition alimentaire pour truies mères, laquelle contient au moins un composant du groupe constitué par des cellules bactériennes stérilisées, des fragments cellulaires désintégrés obtenus par désintégration mécanique ou décomposition enzymatique des cellules et des fractions contenant des composants de la paroi cellulaire obtenues par fractionnement des fragments cellulaires désintégrés.

6. Composition alimentaire pour truies mères selon la revendication 1, où les cellules bactériennes sont sélectionnées parmi des bactéries appartenant aux genres Bacillus, Brevibacterium et Corynebacterium.

7. Composition selon la revendication 5 ou 6, à utiliser comme aliment pour truies mères gravides de façon à réduire le pourcentage de mortalité des porcelets des truies durant leur mise bas ou leur allaitement et à prévenir la diarrhée chez les porcelets mis bas, pour ainsi favoriser l'élévation de leur poids durant la période d'allaitement.

8. Composition à utiliser selon la revendication 7, où ladite composition alimentaire est donnée chaque jour à des truies mères gravides au moins pendant une semaine avant la mise bas de leurs porcelets.
